(19) Europäisches Patentamt
European Patent Office
Office européen des brevets

(11) EP 1 113 161 B1

(12) EUROPEAN PATENT SPECIFICATION

(45) Date of publication and mention of the grant of the patent:
**08.06.2005 Bulletin 2005/23**

(51) Int Cl.7: **F02D 21/08**

(21) Application number: **99126211.4**

(22) Date of filing: **30.12.1999**

(54) **Apparatus for controlling exhaust valve recirculation**

Vorrichtung zur Steuerung der Abgasrückführung

Dispositif pour contrôler la recirculation de gaz d'échappement

(84) Designated Contracting States:
**DE FR GB IT SE**

(43) Date of publication of application:
**04.07.2001 Bulletin 2001/27**

(73) Proprietor: **ROBERT BOSCH GMBH**
**70442 Stuttgart (DE)**

(72) Inventors:
- **Engel, Gerhard**
  **70469 Stuttgart (DE)**
- **Birk, Manfred**
  **71739 Oberriexingen (DE)**
- **Rupp, Peter**
  **71686 Remseck (DE)**

(56) References cited:
**GB-A- 2 128 251**
**US-A- 4 399 791**
**US-A- 4 614 175**
**US-A- 4 768 491**
**US-A- 4 790 286**

- **BOSCH , MOTRONIC 1983, P.21 and 1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 113 161 B1

## Description

Background of the Invention

The present invention relates to an apparatus and method for controlling exhaust gas recirculation (EGR) in an internal combustion engine.

Several methods and devices for controlling exhaust gas recirculation in an internal combustion are engine are known and are widely used as a way of decreasing $NO_x$ concentration in the exhaust gas. Typically these systems control the exhaust gas recirculation using a back pressure transducer valve and are unable to detect the actual exhaust gas recirculation rate. As a result, when the back pressure transducer valve malfunctions or deteriorates, the exhaust gas recirculation rate can increase leading to worsened driveability and increased the $NO_x$ concentration in the exhaust gas.

Alternatively, the air mass in the intake duct or the oxygen concentration in the exhaust have been used in EGR control.

At low EGR rates, emissions characteristics depend very sensitively on how accurately an EGR rate can be established. With existing air mass control loops, EGR rates are determined only indirectly. As a result of tolerances in, for example, gas throughput through the engine, or sensor tolerances, the EGR rates actually established can deciate greatly from the desired EGR rates. When the EGR rate is used as a controlled variable, EGR rate errors cannot occur.

German Patent DE 42 22 414 describes an EGR control device that controls exhaust gas recirculation based in part on signals from an oxygen concentration sensor located in the intake duct of an internal combustion engine. Using readings from the oxygen sensor, that patent estimates an actual EGR rate based upon a characteristic diagram showing typical calues for an EGR rate in relationship to oxygen concentration levels in the intake duct. However, the actual EGR rate depends, in addition, on the air/fuel ratio. Some oxygen sensors show a dependency on the pressure, e. g. in the intake duct. Therefore, their output signal must be corrected by that pressure.

United States Patent 4,614,175 discloses an exhaust gas recirculation control system for an engine, in which the recirculation rate is controlled so as to have a desired value by an exhaust gas recirculation control valve disposed between the exhaust pipe and the inlet pipe of the engine. The control valve is controlled by an electronic control unit which determines the desired recirculation rate from a predetermined relationship based on the operation condition of the engine which is determined by the engine speed and the engine pressure as well as on the output of an oxygen sensor. The inlet pipe of the engine may be divided into two inlet paths, one of which has mounted thereon the oxygen sensor.

United States Patent 4,790,286 discloses an EGR device for an IC engine which comprises an EGR control valve installed in an EGR passageway communicating with an exhaust system and intake system of an internal combustion engine, an oxygen sensor for detecting the oxygen content of the intake air installed in the downstream of the opening of the EGR passageway in said intake system, a pressure sensor for detecting the atmospheric pressure in the oxygen sensor, and an EGR controller for computing a first quantity corresponding to a target exhaust gas reflux rate, correcting the output signal of the oxygen sensor using the output signal of the pressure sensor, and opening or shutting said EGR control valve in proportion to the deviation of the second quantity thus corrected from the first quantity in order to set the operation condition of the engine in conformity with a predetermined target EGR rate.

Summary of the Invention

The present invention relates to control of the EGR by measuring oxygen concentration in the intake section. For that purpose, the probe is located at a point downstream from exhaust gas recirculation into the intake duct, where exhaust gas and fresh air have mixed. The control of the EGR is characterized by the features according to claim 1.

The controlled variable used to control the system can be either the oxygen concentration in the intake section or the EGR rate calculated therefrom.

The present invention relates to an apparatus for controlling exhaust gas recirculation in a motor vehicle having an internal combustion engine with an intake duct to allow influx of air into the engine, an exhaust duct to allow escape of exhaust gas from the engine, an exhaust gas recirculation passage connecting the intake and exhaust ducts for a passage of exhaust gas from the exhaust duct to the intake duct, and an EGR valve for regulating the passage of exhaust gas through the exhaust gas recirculation passage, characterized in that an oxygen sensor is provided at the intake duct at a point downstream from a junction of the intake duct and the recirculation passage, a pressure sensor is provided for detecting pressure inside the of the intake duct, an EGR controller is provided for activating the EGR valve based upon a signal from the oxygen sensor and a signal from the pressure sensor.

Brief Description of the Drawings

Figure 1 is one example of a characteristic diagram illustrating the relationship between an output signal of an oxygen sensor and the concentration of oxygen.

Figure 2 is a schematic drawing showing corrections made by the EGR control unit based upon readings from a pressure sensor in the intake duct.

Figure 3 is a schematic drawing showing an EGR control structure using either the oxygen concentration in the intake duct or the EGR rate, with an optional pilot controller.

Figure 4 is a schematic drawing showing an EGR control structure using either the oxygen concentration in the intake duct or the EGR rate as a superimposed control circuit for an EGR control system.

Figure 5 and 6 are schematic drawings showing an EGR control structure using either the oxygen concentration in the intake duct or the EGR rate as an adaptation variable for an EGR control system.

Detailed Description

The invention is illustrated below with reference to several exemplary embodiments.

The oxygen concentration in the intake duct $O_{2ist}$ is determined from a signal (voltage signal $U_{O2}$) from an oxygen sensor, sometimes also referred to as a $\underline{\lambda}$ probe. Figure 1 is a characteristic diagram showing the relationship between the oxygen sensor signal $U_{O2}$ (measured in volts) and the oxygen concentration $O_{2ist}$. The curve in the diagram is drawn to the following reference points observed in laboratory experiments of an $N_2/O_2$ mixture with a pressure of 1013 mbar and an outside temperature of 25°C: 2.50V = 0.00% $O_2$, 3.10V = 3.00% $O_2$, 3.69V = 6.00% $O_2$, 4.17V = 8.36% $O_2$, and 4.91V = 12.00% $O_2$.

The characteristic curve in Figure 1 is valid only for atmospheric pressure. However, the signals from the oxygen sensor are pressure-dependent and the pressure in the intake duct P can reach up to 3 bar when boost is active. Therefore, in order to determine the actual oxygen concentration in the intake duct $O_{2ist}$, the voltage signal from the oxygen sensor $U_{O2}$ must be corrected with the pressure value P. As shown schematically in Figures 2a and 2b, the correction can be made to the signal before applying the characteristic diagram or afterward. Or, as shown schematically in Figure 2c, the signal can be corrected in a sensor characteristics map that accounts for pressure values. Pressure pulsations that occur at ignition frequency may make it necessary for the oxygen concentration in the intake section to be calculated synchronously with engine speed. If there is only one engine-speed-synchronized calculation per ignition period, the oxygen concentration $O_{2ist}$ is calculated once per sample. If there are two engine-speed-synchronized calculations per ignition period, an average is taken of the new oxygen concentration $O_{2akt,k}$ and old oxygen concentration $O_{2akt,k-1}$ to yield an average oxygen concentration $O_{2ist}$ at each engine speed interrupt, as shown schematically in Figure 2d.

Alternatively, it is possible to evaluate the oxygen concentration much more frequently than the calculation of the EGR controller, as shown schematically in Figure 2e. For example, the oxygen concentration in the intake section could be calculated every 1 ms. From the oxygen concentration values $O_{2lms}$ averaged over one ignition period, the actual value signal $O_{2ist}$ for the controller is then calculated. This improves accuracy of the oxygen concentration signal, especially on nonlinear characteristic diagrams of an oxygen sensor.

The EGR rate can be calculated from the oxygen concentration in the intake manifold $O_{2ist}$ using, for example, the following equation:

$$EGR_{ist} = \left(1+0{,}21/3\right)/\left(1+0{,}21/3\right)*\left(1-\left(O_{2ist}/0{,}21\right)\right)$$

with λ being the stoichiometric airflow ratio. For λ > 1,5 the equation can be simplified to:

$$EGR_{ist} \approx \lambda*(1-[O_{2ist}/0.21])$$

The stoichiometric airflow ratio λ required for EGR rate calculation can be determined in various ways. For example, a second oxygen sensor, or λ probe, located in the exhaust yields a value for λ according to the following formula:

$$\lambda = \frac{1/3 O_2 + 1}{1\text{-}4{,}76 O_2}$$

wherein $O_2$ represents the oxygen concentration in the exhaust. Alternatively, λ can be calculated according to the following known formula using values for air mass $M_A$ and fuel mass $M_F$ :

$$\lambda = M_A / (14.5 * M_F)$$

The air mass can be determined, for example, using a air flow meter mounted inside of the intake duct. The fuel mass can be determined, for example, by a map using time of injection and injection pressure as inputs.

Thus, an electronic control unit, for example an EGR controller which consists of a PI controller can determine the current EGR rate, $EGR_{ist}$, at any given time based in part on readings from an oxygen sensor in the intake duct.

Figure 3a illustrates an example of a routine according to the present invention for using the current EGR rate, $EGR_{ist}$, as a feedback signal for improving the control of a conventional EGR control system. Referring to the diagram, the routine begins at step 301. In step 302, the EGR set point rate $EGR_{soll}$ is determined in the conventional way, based on, for example, an engine speed, a fuel mass, and other inputs such as air temperature and atmospheric pressure. In the next step, the current EGR rate, $EGR_{ist}$, is determined based in part on the signal $U_{O2}$ from the oxygen sensor as explained above. Next, in step 304, the values are compared to one another. If the current EGR rate $EGR_{ist}$ is equal to the EGR rate setpoint $EGR_{soll}$ the routine starts again at 301 without an adjustment to the EGR valve. If the values differ from one another, then in step 305, it is determined if the setpoint EGR rate $EGR_{soll}$ is greater than the current EGR rate $EGR_{ist}$. If so, the EGR controller adjusts an EGR valve in an opening direction in step 306 by an amount depending at least on the deviation between the setpoint EGR rate $EGR_{soll}$ and the actual EGR rate $EGR_{ist}$. That adjustment tends to increase the EGR rate, and the routine begins again at step 301. If the setpoint EGR rate $EGR_{soll}$ is not greater than the current EGR rate $EGR_{ist}$, then the EGR controller adjusts the valve in the closing direction in step 307 by an amount depending at least on the deviation between the setpoint EGR rate $EGR_{soll}$ and the actual EGR rate $EGR_{ist}$. That adjustment has the effect of decreasing the current EGR rate $EGR_{ist}$, and the routine begins again at step 301.

The routine illustrated in Figure 3a could also be performed using oxygen concentration values in the intake duct. In step 302 an oxygen concentration setpoint $O_{2soll}$ can be determined based on inputs which include current engine speed, fuel mass, and other inputs. The current oxygen concentration $O_{2ist}$ is then determined based on the signal $U_{O2}$ from the oxygen sensor. The oxygen concentration setpoint $O_{2soll}$ is then compared to the current oxygen concentration $O_{2ist}$ in step 304. If they are not the same, then in step 305 it is determined if the oxygen concentration setpoint $O_{2soll}$ is less than the current oxygen concentration $O_{2ist}$. If so, then the EGR controller adjusts the EGR valve in the opening direction tending to increase the amount of exhaust gas that is recirculated and therefore decrease the current oxygen concentration inside the intake duct. After the adjustment is made in step 306, the routine begins again at step 301. If the oxygen concentration setpoint $O_{2soll}$ is not less than the current oxygen concentration $O_{2ist}$, then the EGR controller adjusts the EGR valve in the closing direction, tending to decrease the recirculation of exhaust gas and thus increase the oxygen concentration $O_{2ist}$. The routine in Figure 3a runs constantly and repeatedly as long as the engine is running.

Figure 3b illustrates schematically an EGR/oxygen concentration control circuit that functions as described in Figure 3a. For more rapid regulation, a setting signal from a pilot control step 3.4 can be superimposed on the controller setting signal. The input variables for calculating the pilot value are the same variables also required to form the setpoint. Thus, after the EGR/$O_2$ control step 3.3, the pilot control value is added to the EGR/$O_2$ control value at addition point 3.5 and the sum is used to adjust the EGR valve in step 3.6.

Figure 4 illustrates schematically how a conventional EGR control system is corrected using the value for the current EGR rate $EGR_{ist}$ or the value for the current oxygen concentration $O_{2ist}$. The EGR/oxygen concentration control circuit shown in Figure 3b is superimposed upon a known control circuit for controlling the air mass in the intake duct. The EGR/oxygen concentration control circuit functions to minimize tolerance-related deviations in an open-loop or closed-loop EGR control system (for example, an air mass controlled EGR system).

Thus, as shown schematically in Figure 4, in a conventional EGR control system, the air mass setpoint $M_{Asoll}$ is determined in step 4.5. From that value, the current air mass $M_{Aist}$ is subtracted at comparison point 4.4 and the difference is used in step 4.6 for controlling the air mass. Depending on the difference between the sum of the air mass setpoints $M_{Asoll}$, ($\Delta M_{Asoll}$) and the current air mass $M_{Aist}$, the EGR valve is adjusted until the air mass setpoint $M_{Asoll}$

and the current air mass $M_{Aist}$ are equal. By superimposing an EGR/$O_2$ control circuit, the delta value for the air mass setpoint $\Delta M_{Asoll}$ is calculated in the EGR/$O_2$ control step 4.3.

This delta value $\Delta M_{Asoll}$ is the result of a deviation between signals $EGR_{ist}$ and $EGR_{soll}$ or the signals $O_{2ist}$ and $O_{2soll}$. The EGR/$O_2$ controller 4.3 controls the EGR valve in a manner similar as that shown in Figure 3a at steps 306 and 307.

The delta value for the air mass setpoint $\Delta M_{Asoll}$ is then added to the air mass setpoint $M_{Asoll}$, and the current air mass $M_{Aist}$ at addition point 4.4 and the result is processed in the air mass control step 4.6, and the EGR valve is adjusted accordingly in step 4.7.

Another possibility for improving an open- or closed-loop EGR control system using the $O_2$ signal from the intake duct is to learn the errors made by a subordinate closed- or open-loop control system, and to apply the learned values to the subordinate structure.

Figure 5 illustrates schematically a control circuit for improving a conventional EGR control system using a correction plane established at step 5.7 As in Figure 4, the conventional control cycle for EGR control using air mass $M_A$ values is shown in steps 5.9, 5.10, and 5.11 (corresponding to steps 4.5, 4.4, and 4.6 in Figure 4 respectively). Switch 5.8 merely illustrates the concept that the correction using the correction plane values established at step 5.7 can be applied either before or after the air mass control step 5.11, (i.e. at addition point 5.10 or addition point 5.12). The correction plane values are derived from differences between various EGR rate setpoint ($EGR_{soll}$) and current EGR rate ($EGR_{ist}$)values (or from differences between oxygen concentration setpoint $O_{2soll}$ and current oxygen concentration $O_{2ist}$ values). As previously described the setpoint values are determined based upon engine speed, fuel mass and other inputs at step 5.1. Next, at comparison point 5.2, the current EGR rate or oxygen concentration value is subtracted from the setpoint EGR rate or oxygen concentration value. An internal logic, for example a logic circuit or software residing in the EGR controller, send the difference values from comparison point 5.2 through one of the integrators 5.4, 5.5, and 5.6, depending on the range of engine speed and fuel mass values. For example integrator 5.4 may process lower range values, integrator 5.5 may process middle range values, and integrator 5.6 may process higher range values. Each range is referred to as a learning region. The results of each set of correction values are stored in each integrator. The long-term results gathered for each learning area are then used for the calculation of a correction plane at step 5.7. Note that two correction planes can be established at step 5.7 if four integrators are used to establish four correction points from four learning regions.

Figure 6 illustrates schematically how a correction plane is established with reference to three axes. The x-axis represents the engine speed, the z-axis represents the fuel mass $M_F$, and the y-axis represents the correction value. The learning regions designate fuel mass and engine speed inputs for which a correction value is calculated based on differences between setpoint values and a current value within the learning region. A correction plane is then established based upon the three correction values from the three learning regions. The plane allows correction values to be interpolated and/or extrapolated to other fuel mass and engine speed values, and thus corrections can be made to values which fall outside one of the three learning regions.

The advantage of this structure is that, as soon as the correcting values are built and the correction plane is calculated, the correction value can be applied immediately for each point of operation of the engine (for each speed and fuel mass). The time necessary for adjusting the EGR rate or oxygen concentration as shown in Figures 3 and 4 is thus reduced because individual calculations are no longer required.

Another possible solution uses a correction map instead of the correction plane. In this case there are more than three different learning regions. The correction value is then calculated by interpolation between the correction values of the learning regions.

## Claims

1. An apparatus for controlling exhaust gas recirculation in a motor vehicle having an internal combustion engine with an intake duct to allow influx of air into the engine, an exhaust duct to allow escape of exhaust gas from the engine, an exhaust gas recirculation passage connecting the intake and exhaust ducts for a passage of exhaust gas from the exhaust duct to the intake duct, and an EGR valve for regulating the passage of exhaust gas through the exhaust gas recirculation passage, an oxygen sensor is provided at the intake duct at a point downstream from a junction of the intake duct and the recirculation passage, a pressure sensor is provided for detecting pressure inside the of the intake duct, an EGR controller is provided for activating the EGR valve based upon a current exhaust gas recirculation rate **characterized in that** the EGR controller determines the current exhaust gas recirculation rate based upon a signal from the oxygen sensor, a signal from the pressure sensor, and a $\lambda$ value in the exhaust duct.

2. The apparatus in claim 1, **characterized in that** the current EGR rate or the current oxygen concentration in the intake duct is derived from the signal from the oxygen sensor and the signal from the pressure sensor.

**3.** The apparatus as recited in claim 1, **characterized in that** the EGR controller corrects its output and/or the signal from the oxygen sensor synchronously with a speed of the engine, at least once per ignition cycle.

**4.** The apparatus as recited in claim 1, **characterized in that** the EGR controller corrects its output and/or the signal from the oxygen sensor based on an average of several oxygen concentration measurements taken within a single ignition period.

**5.** The apparatus as recited in claim 4, **characterized in that** the λ value is determined from a second oxygen sensor located in the exhaust duct.

**6.** The apparatus as recited in one of the foregoing claims, **characterized in that** the λ value is determined from the air mass $M_A$ and the fuel mass $M_F$.

**7.** The apparatus as recited in one of the foregoing claims, **characterized in that** the EGR controller calculates an oxygen concentration set point and compares it to the current oxygen concentration.

**8.** The apparatus as recited in claim 6, **characterized in that** the EGR controller calculates the oxygen concentration set point based at least upon fuel mass and engine speed variables.

**9.** The apparatus as recited in one of the foregoing claims, **characterized in that** the EGR controller calculates an EGR rate set point and compares it to the current EGR rate.

**10.** The apparatus as recited in one of the foregoing claims, **characterized in that** the EGR controller activates the EGR valve until the current EGR rate approximates the EGR rate set point or until the oxygen concentration approximates the oxygen concentration set point.

**11.** The apparatus as recited in one of the foregoing claims, **characterized in that** the EGR controller calculates a correction plane and activates the EGR valve based upon a correction value derived from the correction plane.

**12.** The apparatus as recited in one of the foregoing claims, **characterized in that** the EGR controller further calculates a correction map and uses values from the correction map to activate the EGR valve.

**Patentansprüche**

**1.** Vorrichtung zur Regelung der Abgasrückführung in einem Kraftfahrzeug mit einem Verbrennungsmotor mit einem Einlaßkanal, um das Einströmen von Luft in den Motor zuzulassen, einem Abgaskanal, um das Ausströmen von Abgas aus dem Motor zuzulassen, einem Abgasrückführungsdurchgang, der den Einlaßkanal und den Abgaskanal verbindet, um Abgas vom Abgaskanal zum Einlaßkanal durchleiten zu können, sowie mit einem Abgasrückführungsventil, um das durch den Abgasrückführungsdurchgang durchgeleitete Abgas zu regulieren, wobei am Einlaßkanal an einem Punkt stromabwärts hinter einer Verbindung des Einlaßkanals und des Rückführungsdurchgangs ein Sauerstoffsensor vorgesehen ist, ein Drucksensor vorgesehen ist, um den Druck innerhalb des Einlaßkanals zu ermitteln, und ein Abgasrückführungsregler vorgesehen ist, um das Abgasrückführungsventil auf der Basis einer augenblicklichen Abgasrückführungsrate zu aktivieren, **dadurch gekennzeichnet, daß** der Abgasrückführungsregler die augenblickliche Abgasrückführungsrate auf der Basis eines Signals vom Sauerstoffsensor, eines Signals vom Drucksensor und eines λ-Werts im Abgaskanal bestimmt.

**2.** Vorrichtung nach Anspruch 1, **dadurch gekennzeichnet, daß** die augenblickliche Abgasrückführungsrate oder die augenblickliche Sauerstoffkonzentration im Einlaßkanal vom Signal des Sauerstoffsensors und vom Signal des Drucksensors abgeleitet wird.

**3.** Vorrichtung nach Anspruch 1, **dadurch gekennzeichnet, daß** der Abgasrückführungsregler seine Ausgabe und/oder das Signal vom Sauerstoffsensor synchron mit einer Drehzahl des Motors korrigiert, und zwar mindestens einmal pro Zündungszyklus.

**4.** Vorrichtung nach Anspruch 1, **dadurch gekennzeichnet, daß** der Abgasrückführungsregler seine Ausgabe und/oder das Signal vom Sauerstoffsensor auf der Basis eines Durchschnitts mehrerer, innerhalb eines einzelnen Zündzeitraums vorgenommener Sauerstoffkonzentrationsmessungen korrigiert.

**5.** Vorrichtung nach Anspruch 4, **dadurch gekennzeichnet, daß** der λ-Wert von einem zweiten, im Abgaskanal befindlichen Sauerstoffsensor bestimmt wird.

**6.** Vorrichtung nach einem der vorstehend aufgeführten Ansprüche, **dadurch gekennzeichnet, daß** der λ-Wert aus der Luftmasse $M_A$ und der Kraftstoffmasse $M_F$ bestimmt wird.

**7.** Vorrichtung nach einem der vorstehend aufgeführten Ansprüche, **dadurch gekennzeichnet, daß** der Abgasrückführungsregler einen Sauerstoffkonzentrationssollwert berechnet und ihn mit der augenblicklichen Sauerstoffkonzentration vergleicht.

**8.** Vorrichtung nach Anspruch 6, **dadurch gekennzeichnet, daß** der Abgasrückführungsregler den Sauerstoffkonzentrationssollwert mindestens auf der Basis von Kraftstoffmassen- und Motordrehzahlvariablen berechnet.

**9.** Vorrichtung nach einem der vorstehend aufgeführten Ansprüche, **dadurch gekennzeichnet, daß** der Abgasrückführungsregler einen Abgasrückführungsratensollwert berechnet und ihn mit der augenblicklichen Abgasdrückführungsrate vergleicht.

**10.** Vorrichtung nach einem der vorstehend aufgeführten Ansprüche, **dadurch gekennzeichnet, daß** der Abgasrückführungsregler das Abgasrückführungsventil aktiviert, bis sich die augenblickliche Abgasrückführungsrate dem Abgasrückführungsratensollwert annähert oder sich die Sauerstoffkonzentration dem Sauerstoffkonzentrationssollwert annähert.

**11.** Vorrichtung nach einem der vorstehend aufgeführten Ansprüche, **dadurch gekennzeichnet, daß** der Abgasrückführungsregler eine Korrekturebene berechnet und das Abgasrückführungsventil auf der Basis eines von der Korrekturebene abgeleiteten Korrekturwerts aktiviert.

**12.** Vorrichtung nach einem der vorstehend aufgeführten Ansprüche, **dadurch gekennzeichnet, daß** der Abgasrückführungsregler weiterhin eine Korrekturkarte berechnet und Werte aus der Korrekturkarte verwendet, um das Abgasrückführungsventil zu aktivieren.

## Revendications

**1.** Dispositif pour contrôler la recirculation de gaz d'échappement dans un véhicule à moteur équipé d'un moteur à combustion interne comprenant un conduit d'admission destiné à permettre un influx d'air dans le moteur, un conduit d'échappement destiné à permettre l'évacuation des gaz d'échappement hors du moteur, et un passage de recirculation de gaz d'échappement reliant les conduits d'admission et d'échappement pour former un passage des gaz d'échappement allant du conduit d'échappement au conduit d'admission, et une soupape de recirculation de gaz d'échappement destinée à réguler le passage des gaz d'échappement à travers le passage de recirculation de gaz d'échappement, et avec un détecteur d'oxygène prévu sur le conduit d'admission en un point situé en aval d'une jonction du conduit d'admission et du passage de recirculation, un capteur de pression étant prévu pour détecter la pression à l'intérieur du conduit d'admission, et un dispositif de commande de recirculation de gaz d'échappement étant prévu pour activer la soupape de recirculation de gaz d'échappement sur la base d'un débit actuel de recirculation de gaz d'échappement,
**caractérisé en ce que**
le dispositif de commande de recirculation de gaz d'échappement détermine le débit actuel de recirculation de gaz d'échappement sur la base d'un signal envoyé par le détecteur d'oxygène, d'un signal envoyé par le capteur de pression et d'une valeur de λ dans le conduit d'échappement.

**2.** Dispositif selon la revendication 1,
**caractérisé en ce que**
le débit actuel de recirculation de gaz d'échappement ou la concentration actuelle en oxygène dans le conduit d'admission est dérivée du signal envoyé par le détecteur d'oxygène et du signal envoyé par le capteur de pression.

**3.** Dispositif selon la revendication 1,

**caractérisé en ce que**
le dispositif de commande de recirculation de gaz d'échappement corrige sa sortie et/ou le signal envoyé par le détecteur d'oxygène d'une façon synchronisée avec une vitesse du moteur, au moins une fois par cycle d'allumage.

**4.** Dispositif selon la revendication 1,
**caractérisé en ce que**
le dispositif de commande de recirculation de gaz d'échappement corrige sa sortie et/ou le signal envoyé par le détecteur d'oxygène sur la base d'une moyenne de plusieurs mesures de la concentration en oxygène prises à l'intérieur d'une seule période d'allumage.

**5.** Dispositif selon la revendication 4,
**caractérisé en ce que**
la valeur de λ est déterminée à partir d'un second détecteur d'oxygène prévu dans le conduit d'échappement.

**6.** Dispositif selon l'une quelconque des revendications précédentes,
**caractérisé en ce que**
la valeur de λ est déterminée à partir de la masse d'air $M_A$ et de la masse de carburant $M_F$.

**7.** Dispositif selon l'une quelconque des revendications précédentes,
**caractérisé en ce que**
le dispositif de commande de recirculation de gaz d'échappement calcule un point de consigne de la concentration en oxygène et compare celui-ci avec la concentration actuelle en oxygène.

**8.** Dispositif selon la revendication 6,
**caractérisé en ce que**
le dispositif de commande de recirculation de gaz d'échappement calcule le point de consigne de la concentration en oxygène sur la base au moins de variables de masse de carburant et de vitesse du moteur.

**9.** Dispositif selon l'une quelconque des revendications précédentes,
**caractérisé en ce que**
le dispositif de commande de recirculation de gaz d'échappement calcule un point de consigne du débit de recirculation de gaz d'échappement et compare celui-ci avec le débit actuel de recirculation de gaz d'échappement.

**10.** Dispositif selon l'une quelconque des revendications précédentes,
**caractérisé en ce que**
le dispositif de commande de recirculation de gaz d'échappement active la soupape de recirculation de gaz d'échappement jusqu'à ce que le débit actuel de recirculation de gaz d'échappement se rapproche du point de consigne du débit de recirculation de gaz d'échappement, ou jusqu'à ce que la concentration en oxygène se rapproche du point de consigne de la concentration en oxygène.

**11.** Dispositif selon l'une quelconque des revendications précédentes,
**caractérisé en ce que**
le dispositif de commande de recirculation de gaz d'échappement calcule un plan de correction et active la soupape de recirculation de gaz d'échappement sur la base d'une valeur de correction dérivée du plan de correction.

**12.** Dispositif selon l'une quelconque des revendications précédentes,
**caractérisé en ce que**
le dispositif de commande de recirculation de gaz d'échappement calcule en outre une carte de correction et utilise des valeurs issues de la carte de correction pour activer la soupape de recirculation de gaz d'échappement.

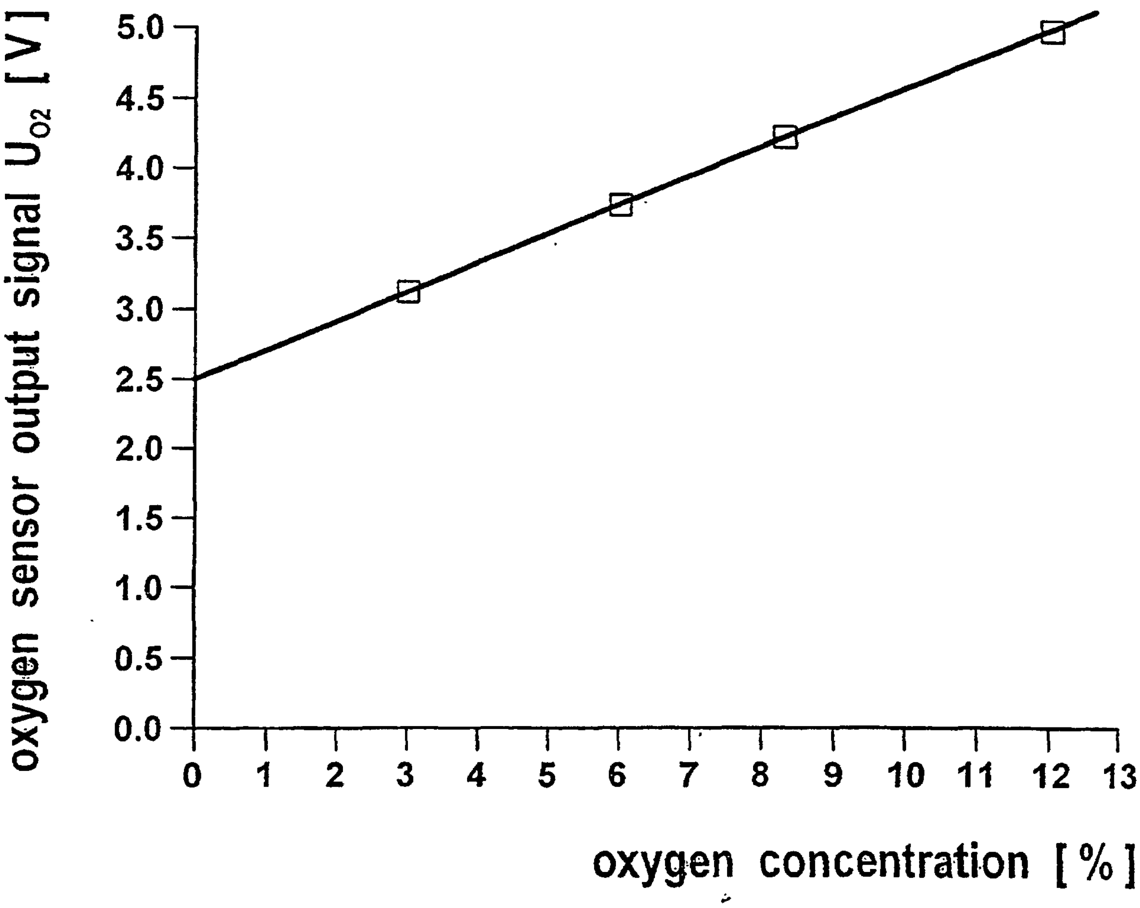
oxygen sensor output signal $U_{O2}$ [ V ]
5.0
4.5
4.0
3.5
3.0
2.5
2.0
1.5
1.0
0.5
0.0
0 1 2 3 4 5 6 7 8 9 10 11 12 13
oxygen concentration [ % ]

FIG. 1

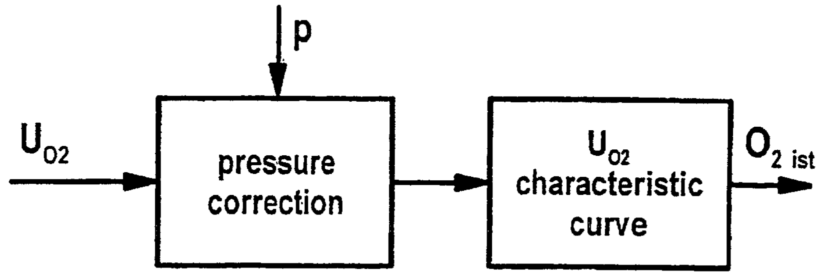


FIG. 2a

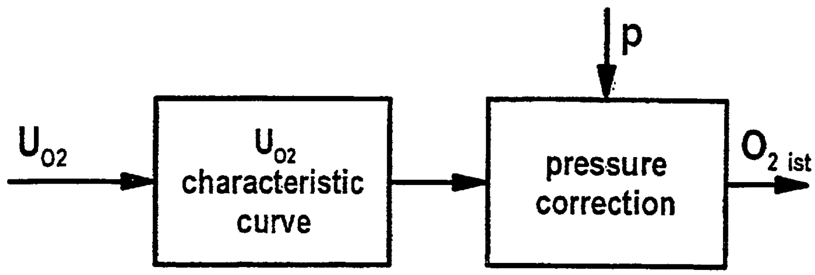


FIG. 2b

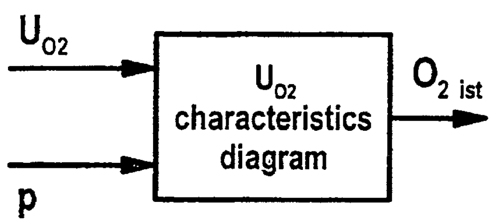


FIG. 2c

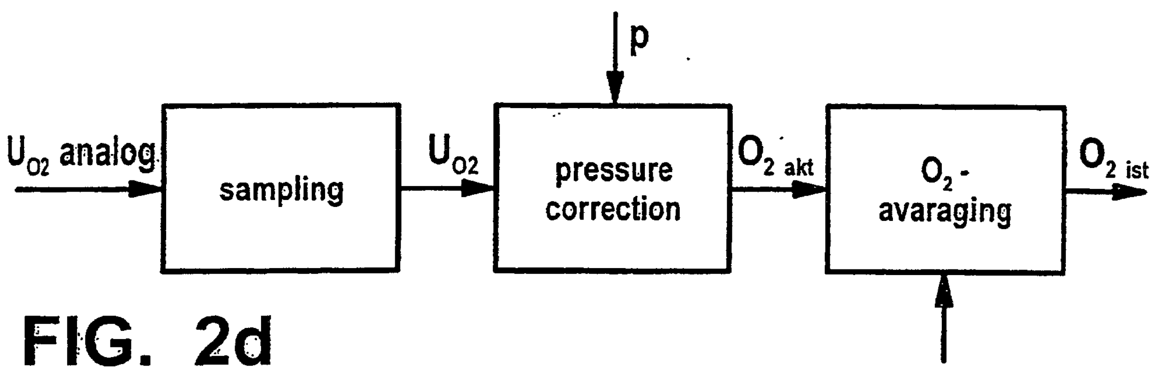


FIG. 2d

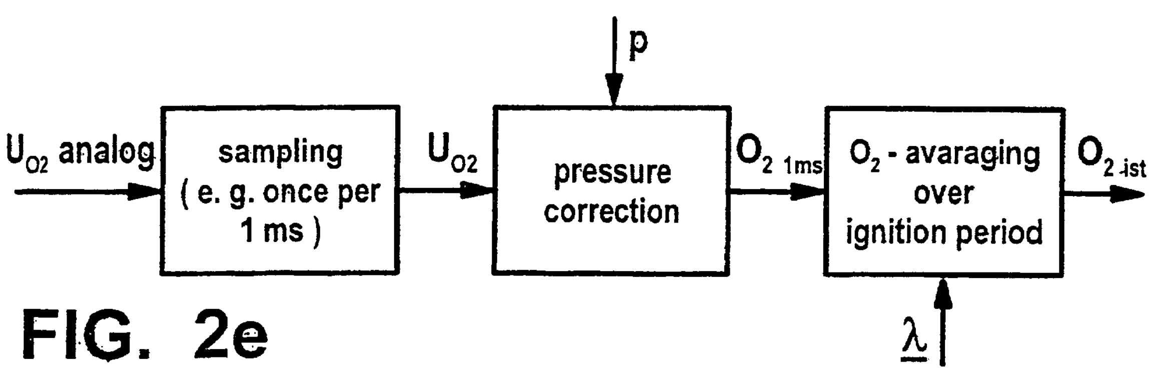


FIG. 2e

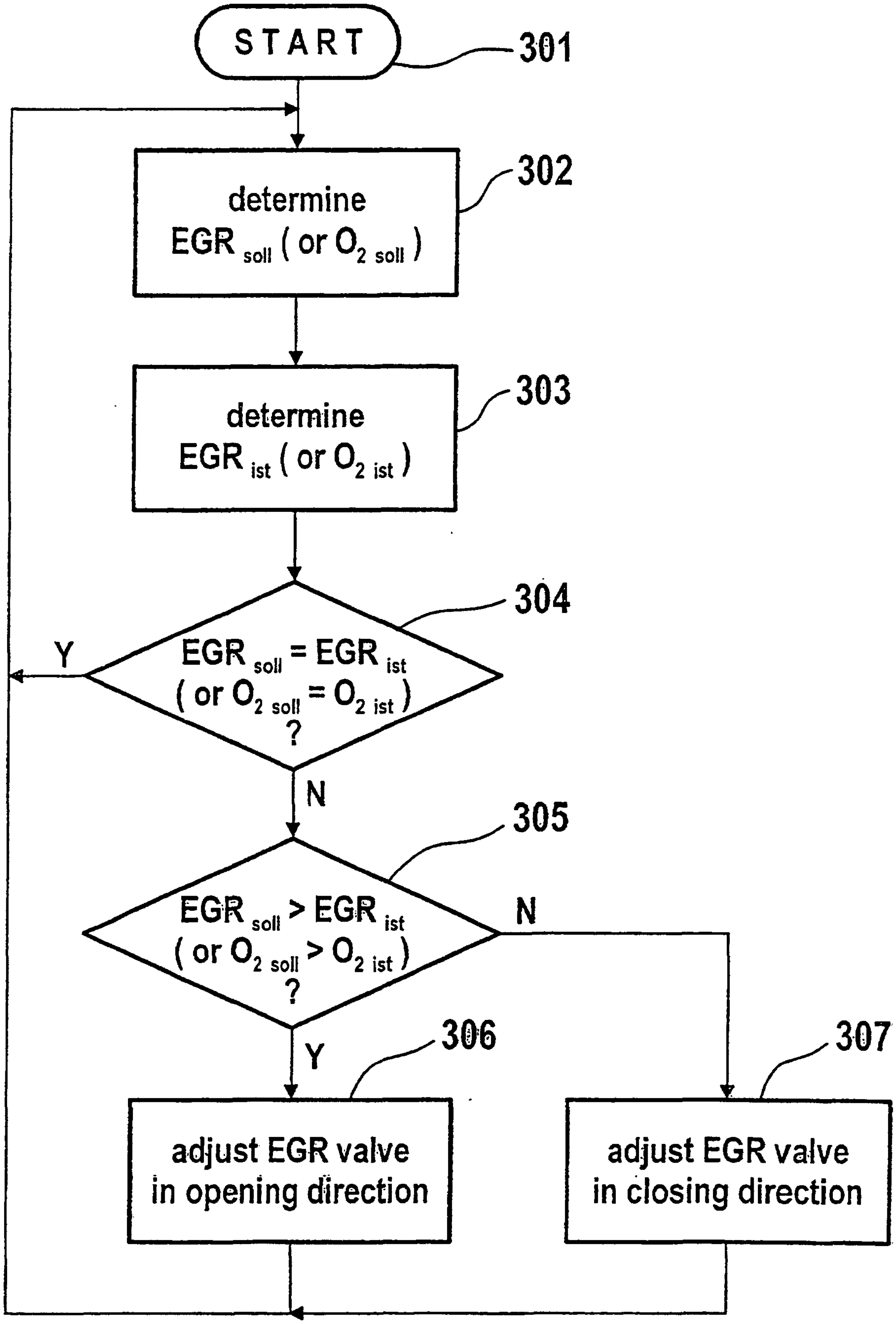
START
301
determine
EGR soll ( or O2 soll )
302
determine
EGR ist ( or O2 ist )
303
304
EGR soll = EGR ist
( or O2 soll = O2 ist )
?
Y
N
305
EGR soll > EGR ist
( or O2 soll > O2 ist )
?
N
Y
306
307
adjust EGR valve
in opening direction
adjust EGR valve
in closing direction

FIG. 3a

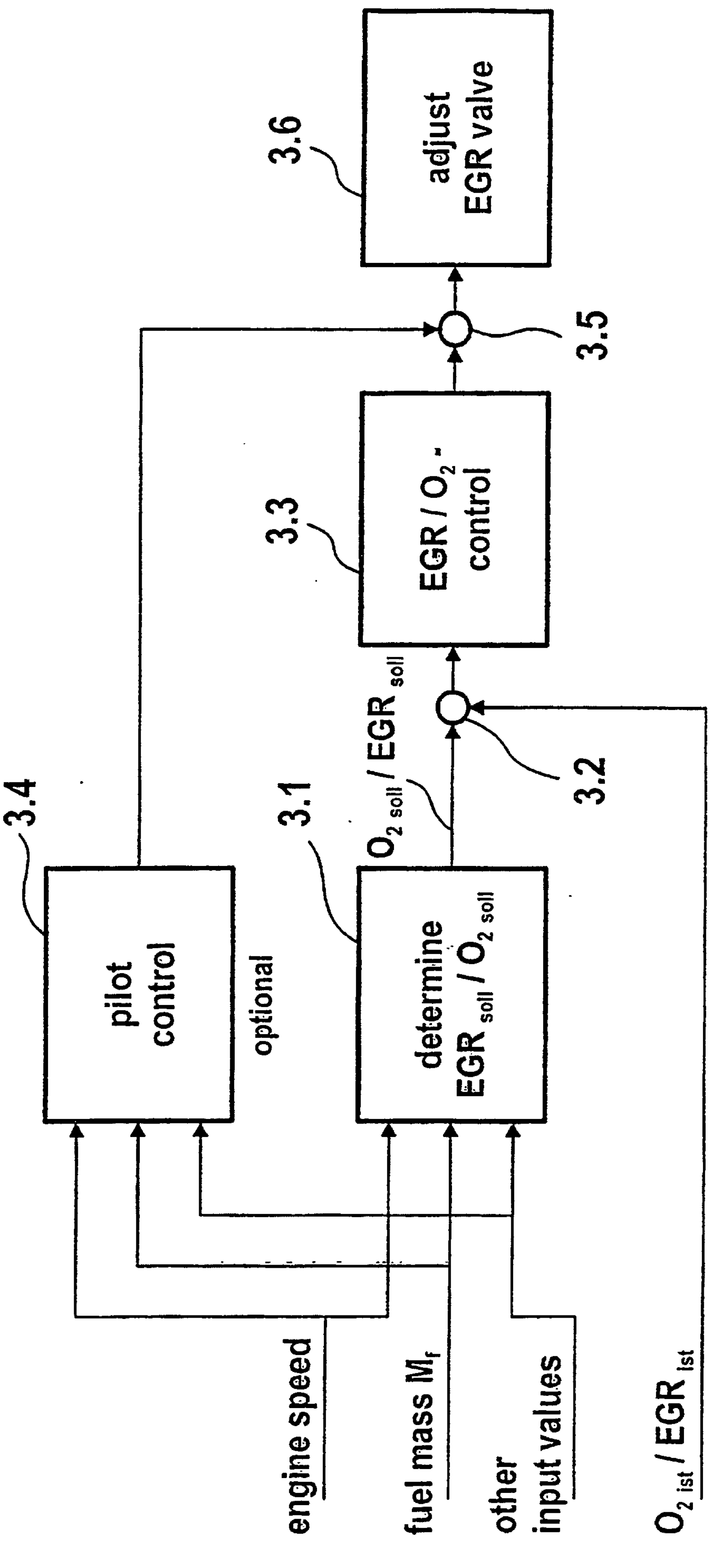
3.6
adjust
EGR valve
3.5
3.3
EGR / $O_2$ -
control
3.4
pilot
control
optional
3.1
determine
$EGR_{soll}$ / $O_{2\ soll}$
$O_{2\ soll}$ / $EGR_{soll}$
3.2
engine speed
fuel mass $M_f$
other
input values
$O_{2\ ist}$ / $EGR_{ist}$

FIG. 3b

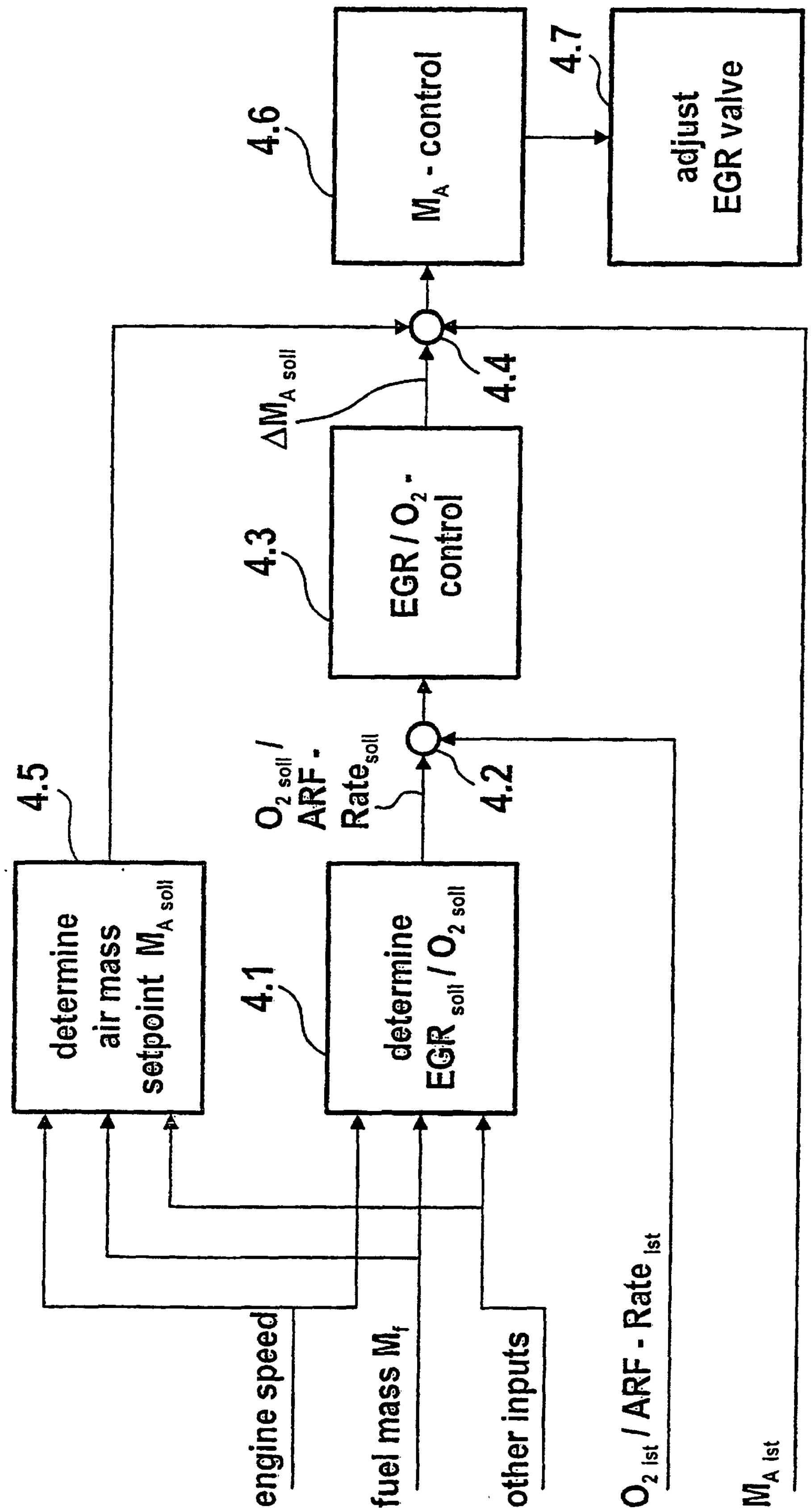
4.5
determine air mass setpoint $M_{A\ soll}$
4.1
determine $EGR_{soll}$ / $O_{2\ soll}$
$O_{2\ soll}$ / ARF - $Rate_{soll}$
4.2
4.3
EGR / $O_2$ - control
$\Delta M_{A\ soll}$
4.4
4.6
$M_A$ - control
4.7
adjust EGR valve
engine speed
fuel mass $M_f$
other inputs
$O_{2\ Ist}$ / ARF - $Rate_{Ist}$
$M_{A\ Ist}$

FIG. 4

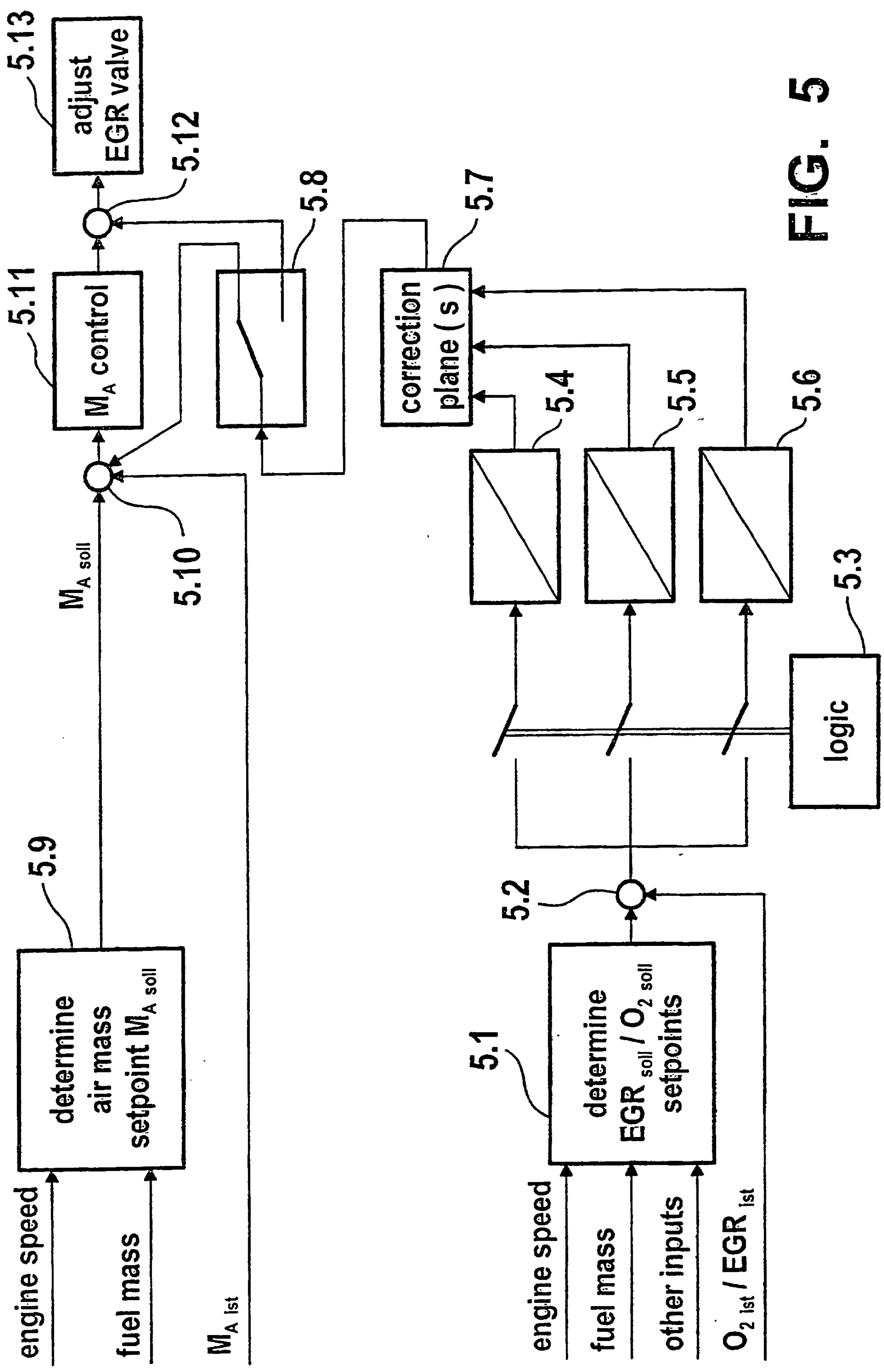
engine speed
fuel mass
$M_{A\ Ist}$
determine air mass setpoint $M_{A\ soll}$
5.9
$M_{A\ soll}$
5.10
$M_A$ control
5.11
5.12
adjust EGR valve
5.13
5.8
correction plane ( s )
5.7
5.4
5.5
5.6
logic
5.3
5.2
determine $EGR_{soll}$ / $O_{2\ soll}$ setpoints
5.1
engine speed
fuel mass
other inputs
$O_{2\ Ist}$ / $EGR_{Ist}$

FIG. 5

FIG. 6

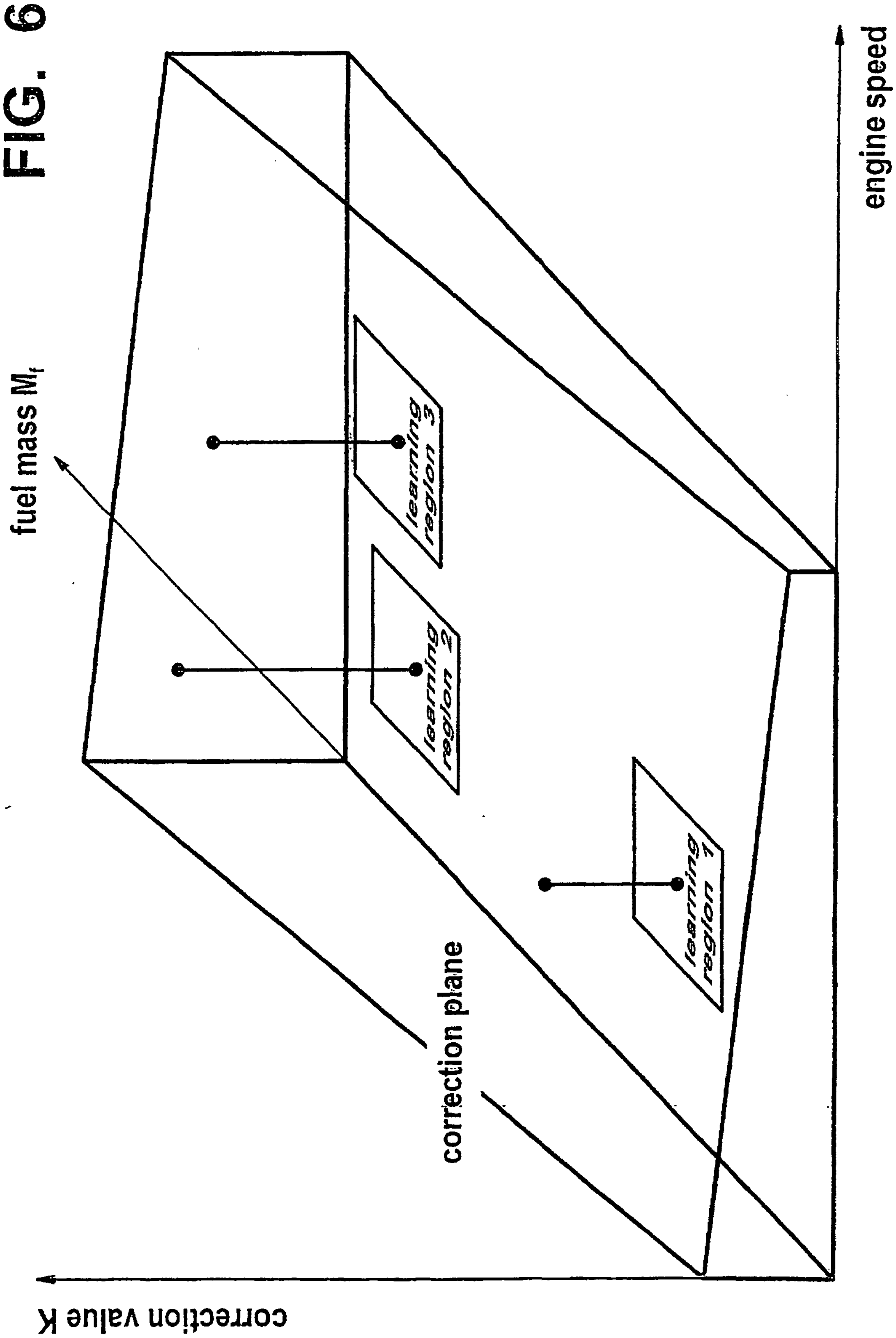
fuel mass $M_f$
engine speed
correction value K
correction plane
learning region 1
learning region 2
learning region 3